# EUROPEAN PATENT SPECIFICATION

(11) **EP 1 333 661 B1**
(45) Date of publication and mention of the grant of the patent: **11.05.2011**
(21) Application number: 02250693.5
(22) Date of filing: 01.02.2002
(51) Int. Cl.: H04N 3/14

(54) **Improved image sensor**
Verbesserter Bildsensor
Capteur d'images amélioré

(43) Date of publication of application: 06.08.2003
(73) Proprietor: STMicroelectronics Limited, Marlow, Buckinghamshire SL7 1YL (GB)
(72) Inventor: Henderson, Robert, Edinburgh EH10 5HA (GB)
(74) Representative: Cooper, John

(56) References cited:
- EP-A- 0 379 671
- WO-A-99/52273
- US-A- 5 742 047

## Description

This invention relates to an improved solid state image sensor, and more particularly to an improved form of active pixel sensor suitable for implementation in a CMOS integrated circuit.

One well known form of such circuits is that having, for each pixel, a pinned photodiode and four transistors. Known circuits of this kind have limitations.

One is that pinned photodiode pixels have a low output voltage swing due to the large capacitance of the floating diffusion onto which the pinned photodiode charge is transferred. The floating diffusion capacitance is difficult to control accurately as it depends on gate oxide, source diffusion and routing capacitance due to the pixel architecture.

Secondly, the voltage on the floating diffusions must be kept sufficiently high as to maintain full depletion of the photodiode. The voltage on the floating diffusion is however light-signal-dependent, and this imposes a limit on the swing of the pixel which in turn requires that the floating diffusion be reset to as high a voltage as possible. However, the reset voltage is limited by amplifier swings and power supply.

EP 0 379 671 shows a photodiode image array with an output amplifier having a capacitor in a feedback path, and which is reset to a virtual earth voltage.

WO 99/52273 shows a low-noise active pixel sensor with a feedback capacitor in an output amplifier and which is reset by a reset gate.

The present invention provides an image sensor having an array of light sensitive pixels; in which each pixel comprises a photosensitive element which develops a charge in response to incident light, a transfer gate operable to transfer said charge to a sense node, a reset gate operable to apply a reset voltage to the sense node, a read gate operable to cause the charge on the sense node to be read out, and a source follower forming part of an output amplifier connected to amplify the read out signal;
characterised in that each pixel further includes a gain capacitor connected to form part of a feedback path across the amplifier controlled by the read and reset gates to reset the pixel to a controlled virtual earth voltage.

From another aspect, the invention provides a method of operating a four-transistor pinned-diode pixel image sensor, the method comprising transferring the photodiode charge onto a gain capacitor connected in feedback across the pixel output amplifier.

Other features and advantages of the invention will be apparent from the description and claims.

An embodiment of the invention will now be described, by way of example only, with reference to the drawings, in which:
Figure 1(a) is a circuit diagram of part of an image sensor forming one embodiment of the invention;
Figure 1(b) is an equivalent circuit of the embodiment of Figure 1(a) illustrating the principle of operation;
Figure 2 is a timing diagram for the circuit of Figure 1;
Figure 3 illustrates a second embodiment which is a modification of Figure 1;
Figures 4(a) and 4(b) are views similar to Figures 1(a) and 1(b) of a further embodiment; and
Figure 5 is a timing diagram illustrating the operation of the circuit of Figure 4.

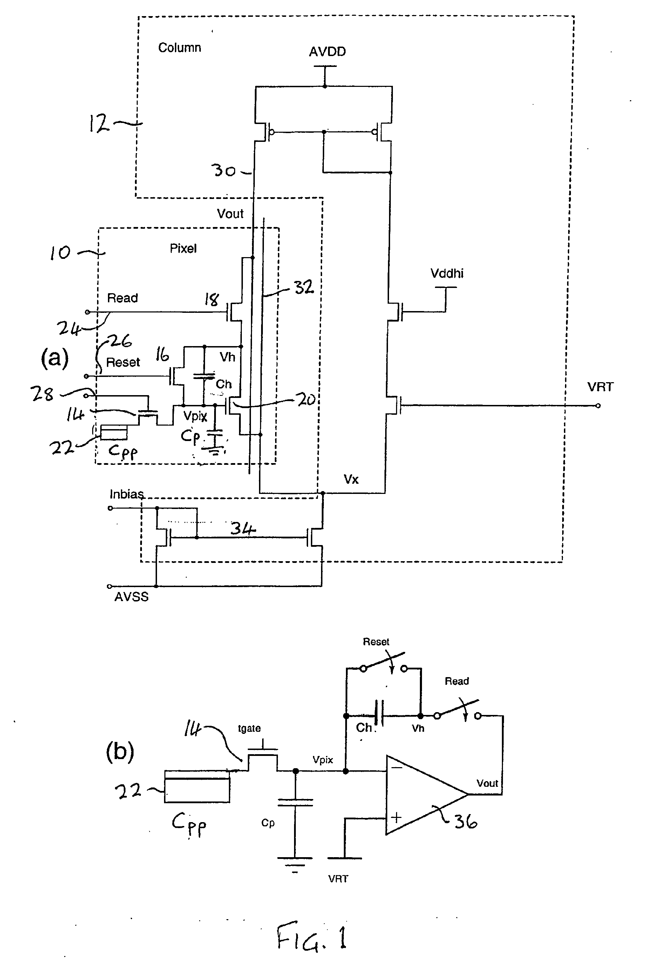

Figure 1 shows one pixel 10 in a column 12 of a pixel array. It will be understood that the array comprises a number of pixels identical to 10 arranged in a number of columns 12.

The pixel 10 comprises four transistors 14,16,18,20 and one capacitor Ch. The transistors operate as a transfer gate 14, reset gate 16, read gate 18 and source follower 20 similarly to the conventional 4T pinned diode circuit. Photodiode 22 has a capacitance Cpp, and the pixel has a grounded parasitic capacitance shown at Cp.

There are three horizontal lines 24,26, 28 for read, reset and transfer gate. There are two vertical lines 30,32 for the output signal Vout and for node Vx. The pixel 10 forms part of a long-tail pair amplifier with the remainder of the components at 34 at the base of the column.

Figure 1(b) shows the equivalent circuit at a higher level of abstraction. An amplifier 36 (the long-tail pair) has a positive input voltage of VRT. A switched capacitor network is connected to the negative input and to the pixel photodiode 22. The network consists of a reset switch (reset gate 16), a read switch (read gate 18) and a feedback capacitor (Ch).

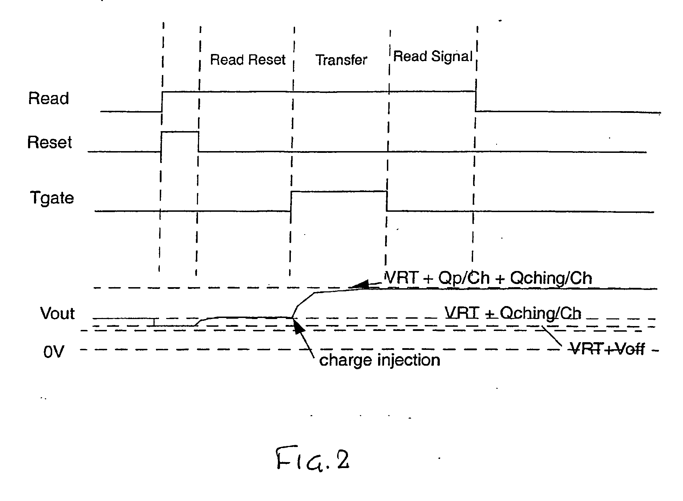

Operation of the circuit is illustrated in the timing diagram of Figure 2.

To reset the pixel, Read and Reset are pulsed high simultaneously. The amplifier is effectively in unity gain feedback and the pixel is forced to VRT + Voff, where Voff is the offset of the amplifier. The reset line is then set low. Charge injection and sampled thermal noise cause the pixel voltage to depart from the ideal voltage VRT + Voff; however the amplifier still has a feedback path via the capacitor to correct the voltage at the virtual ground. The output voltage of the amplifier will change to (VRT + Voff + Qching/Ch), where Qching is the charge injection from the reset transistor, to correct for these errors and restore the virtual ground to VRT + Voff.

Subsequently, the transfer gate 18 is pulsed high to transfer the pinned photodiode charge onto the charge sensing node Vpix. The output changes by a voltage (VRT = Voff + Qching/Ch + Qpp/Ch), where Qpp is the pinned photodiode charge, to restore the virtual ground to VRT + Voff. The effect of this is that the photodiode charge has been transferred onto the feedback capacitor Ch.

Correlated double sampling must be performed on the output voltage to remove the pixel offset and kT/C noise from the signal. As is well known, this involves storing Vout during reset and during read and differencing the two voltages, and will not be described in detail here.

Note that the system has a gain of Cpp/Ch which is controllable by the value of Ch and is independent of the grounded parasitic capacitance Cp.

The large parasitic associated with source junctions on Vout will help to compensate the amplifier. The other large capacitance is associated with Vx and affects slew rate.

The two main advantages of this mode of operation are:
1) The sense node Vpix is always returned to VRT, guaranteeing full depletion of the pinned photodiode.
2) The output swing is set by the ratio Cpp/Ch which can be optimised independently of the grounded parasitic Cp.

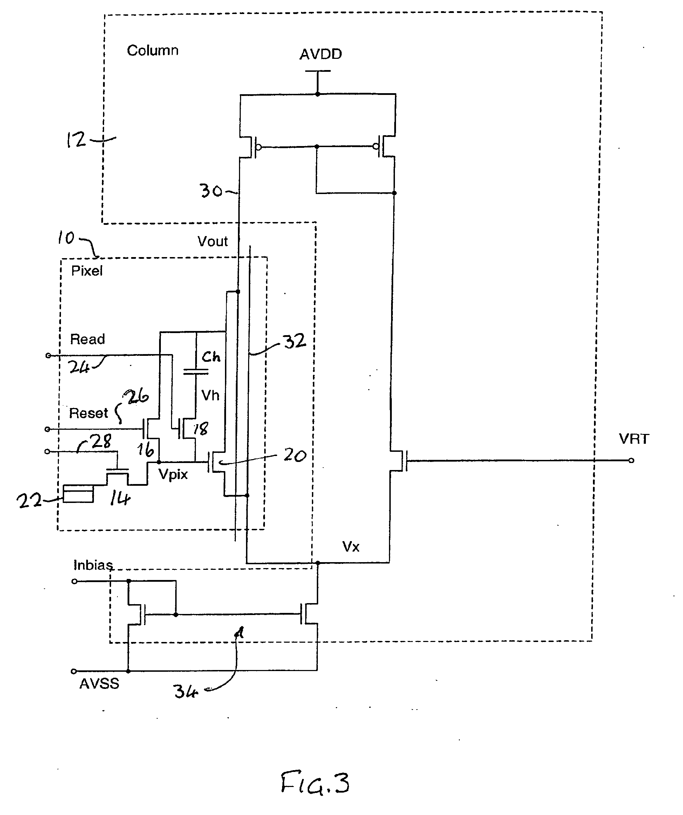

Turning to Figure 3, this shows a variant of the circuit of Figure 1 which does not require the read switch voltage to be charge pumped. This is because the read switch will always be at the VRT potential at the amplifier input. In Figure 1, the output potential may be as high as AVDD and the NMOS read switch will be conductive only to AVDD-Vtn unless the gate voltage is charge pumped. In Figure 3, VRT can be set to a relatively low voltage and thus the read switch will be conductive under all operating conditions. The capacitance seen at Vout is increased by the bottom plate parasitic of the pixel capacitor of all the pixels connected to that column.

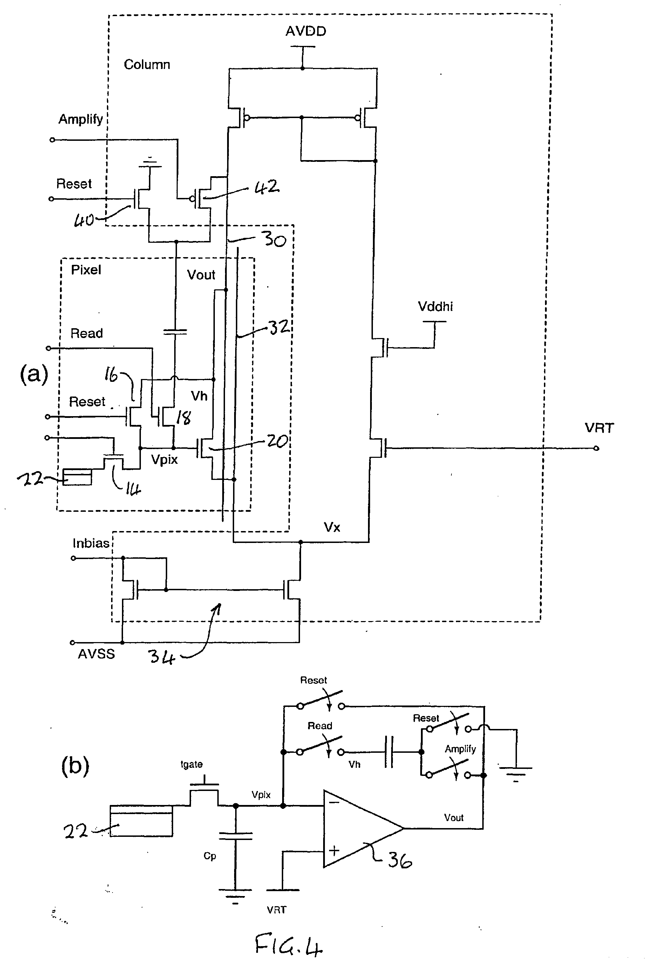

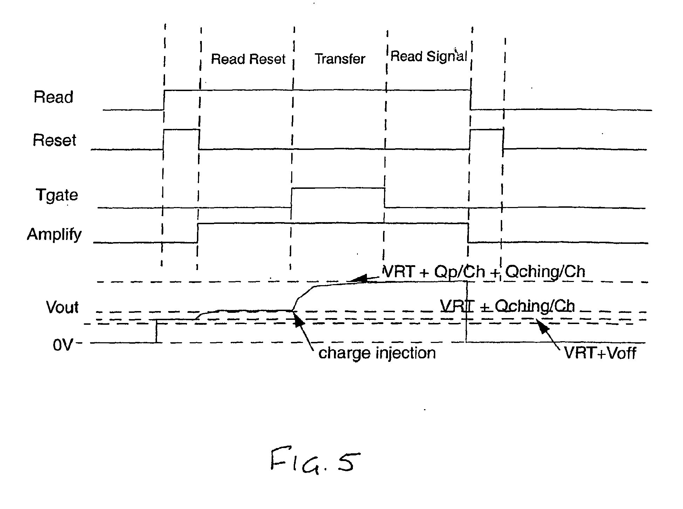

Figure 4 shows another variant. Here an additional vertical line is required to connect each pixel to a column reset switch 40 and an amplify switch 42. The timing of the various switches will be apparent from Figure 5. The amplify switch 42 enables the output voltage to be level shifted to ground at the end of each cycle. This produces an almost rail-to-rail output swing from the amplifier. In contrast, the amplifier in figure 1 will have an output swing from VRT up to AVDD. In Figure 5, the pixel must be reset during a time when it is not being read in order to limit the number of transistors in the pixel to four.

The invention thus provides an image sensor in which the gain of the pixel is defined by a capacitive amplifier with a well-controlled in-pixel capacitance. The amplifier will always reset the pixel to a well-controlled virtual earth voltage, ensuring full depletion of the photodiode under all circumstances. The invention thus makes possible a higher output from a pinned-photodiode pixel, giving improved signal-to-noise and higher sensitivity.

## Claims

1. An image sensor having an array of light sensitive pixels (10);in which each pixel (10) comprises
a photosensitive element (22) which develops a charge in response to incident light,
a transfer gate (14) operable to transfer said charge to a sense node (Vpix),
a reset gate (16) operable to apply a reset voltage to the sense node (Vpix),
a read gate (18) operable to cause the charge on the sense node (Vpix) to be read out, and
a source follower (20) providing an input for an output amplifier (36) connected to amplify the read out signal;
**characterised in that**
each pixel (10) further includes a gain capacitor (Ch) that is connected with the read (18) and reset (16) gates in a feedback path across the amplifier (36) so that the pixel (10) is adapted to be reset to a controlled virtual earth voltage.

2. An image sensor according to claim 1, in which the amplifier (36), for each pixel (10), is formed by the source follower (20) of that pixel (10) in combination with an amplifier circuit (34) common to all the pixels in a given column of the array.

3. An image sensor according to claim 1 or claim 2, in which the reset gate (16) is connected across the gain capacitor (Ch) and the read gate (18) is connected in series with the gain capacitor (Ch), whereby simultaneous closure of the reset (16) and read (18) gates causes the amplifier (36) to act as a unity gain amplifier.

4. An image sensor according to claim 1 or claim 2, in which each column of the pixel array is provided with a vertical line driven by an additional reset gate (40) and an amplify gate (42); and in which each pixel (10) has its gain capacitor (Ch) connected between said vertical line and the pixel read gate (18), the gates (16,18,40,42) being controlled to cause the output voltage of the amplifier (36) to be level-shifted to ground potential at the end of each reset and read cycle.

5. An image sensor according to any preceding claim, in which the photosensitive element (22) is a pinned photodiode.

6. A method of operating a four-transistor pinned-diode pixel image sensor having an array of light sensitive pixels (10) and in which each pixel (10) comprises a photosensitive element (22) which develops a charge in response to incident light, a transfer gate (14) operable to transfer said charge to a sense node (Vpix), a reset gate (16) operable to apply a reset voltage to the sense node (Vpix), a read gate (18) operable to cause the charge on the sense node (Vpix) to be read out, and a source follower (20) providing an input for an output amplifier (36) connected to amplify the read out signal;
the method comprising transferring the photodiode charge onto a gain capacitor (Ch) which is provided in each pixel and which is connected with the read (18) and reset (16) gates in a feedback path across the pixel output amplifier (36) for reading out the charge on the sense node; and resetting the pixel (10) to a virtual earth voltage.

## Patentansprüche

1. Ein Bildsensor mit einer Anordnung von lichtempfindlichen Pixeln (10); wobei jedes Pixel (10) Folgendes beinhaltet:
ein photoempfindliches Element (22), das als Reaktion auf einfallendes Licht eine Ladung entwickelt,
ein Transfergate (14), das betriebsfähig ist, um die Ladung an einen Leseknoten (Vpix) zu verschieben,
ein Rücksetzgate (16), das betriebsfähig ist, um an dem Leseknoten (Vpix) eine Rücksetzspannung anzulegen,
ein Lesegate (18), das betriebsfähig ist, um zu bewirken, dass die Ladung an dem Leseknoten (Vpix) ausgelesen wird, und
einen Source-Folger (20), der einen Eingang für einen Ausgangsverstärker (36) bereitstellt, welcher verbunden ist, um das Auslesesignal zu verstärken;
**dadurch gekennzeichnet, dass**
jedes Pixel (10) ferner einen Verstärkungsfaktorkondensator (Ch) umfasst, der mit dem Lesegate (18) und dem Rücksetzgate (16) in einem Rückführpfad über den Verstärker (36) verbunden ist, so dass das Pixel (10) angepasst ist, um auf eine geregelte Virtuelle-Masse-Spannung rückgesetzt zu werden.

2. Bildsensor gemäß Anspruch 1, wobei der Verstärker (36) für jedes Pixel (10) durch den Source-Folger (20) dieses Pixels (10) in Kombination mit einer Verstärkerschaltung (34), die allen Pixeln in einer gegebenen Spalte der Anordnung gemein ist, gebildet wird.

3. Bildsensor gemäß Anspruch 1 oder Anspruch 2, wobei das Rücksetzgate (16) über den Verstärkungsfaktorkondensator (Ch) verbunden ist und das Lesegate (18) mit dem Verstärkungsfaktorkondensator (Ch) in Reihe verbunden ist, wobei eine gleichzeitige Schließung des Rücksetzgate (16) und des Lesegate (18) bewirkt, dass der Verstärker (36) als ein Verstärker mit einfachem Verstärkungsfaktor wirkt.

4. Bildsensor gemäß Anspruch 1 oder Anspruch 2, wobei jede Spalte der Pixelanordnung mit einer vertikalen Leitung versehen ist, die durch ein zusätzliches Rücksetzgate (40) und ein Verstärkungsgate (42) angetrieben wird, und wobei jedes Pixel (10) seinen Verstärkungsfaktorkondensator (Ch) aufweist, verbunden zwischen der vertikalen Leitung und dem Pixellesegate (18), wobei die Gates (16, 18, 40, 42) geregelt werden, um zu bewirken, dass die Ausgangsspannung des Verstärkers (36) am Ende jedes Rücksetz- und Lesezyklus auf Erdpotential pegelverschoben wird.

5. Bildsensor gemäß einem der vorhergehenden Ansprüche, wobei das photoempfindliche Element (22) eine verstiftete Photodiode ist.

6. Ein Verfahren zum Betreiben eines Bildsensors, bei dem jedes Pixel vier Transistoren und eine verstiftete Diode hat, der eine Anordnung von lichtempfindlichen Pixeln (10) aufweist, und wobei jedes Pixel (10) Folgendes beinhaltet: ein photoempfindliches Element (22), das als Reaktion auf einfallendes Licht eine Ladung entwickelt, ein Transfergate (14), das betriebsfähig ist, um die Ladung an einen Leseknoten (Vpix) zu verschieben, ein Rücksetzgate (16), das betriebsfähig ist, um an dem Leseknoten (Vpix) eine Rücksetzspannung anzulegen, ein Lesegate (18), das betriebsfähig ist, um zu bewirken, dass die Ladung an dem Leseknoten (Vpix) ausgelesen wird, und einen Source-Folger (20), der einen Eingang für einen Ausgangsverstärker (36) bereitstellt, verbunden, um das Auslesesignal zu verstärken;
wobei das Verfahren das Verschieben der Photodiodenladung auf einen Verstärkungsfaktorkondensator (Ch), welcher in jedem Pixel bereitgestellt ist und der mit dem Lesegate (18) und dem Rücksetzgate (16) in einem Rückführpfad über den Pixelausgangsverstärker (36) verbunden ist, um die Ladung an dem Leseknoten auszulesen, und das Rücksetzen des Pixels (10) auf eine Virtuelle-Masse-Spannung beinhaltet.

## Revendications

1. Un capteur d'images ayant une matrice de pixels sensibles à la lumière (10) dans lequel chaque pixel (10) comprend
un élément photosensible (22) qui développe une charge en réponse à de la lumière incidente,
une porte de transfert (14) opérationnelle pour transférer ladite charge à un noeud de détection (Vpix),
une porte de réinitialisation (16) opérationnelle pour appliquer une tension de réinitialisation au noeud de détection (Vpix),
une porte de lecture (18) opérationnelle pour amener la charge sur le noeud de détection (Vpix) à être lue, et
une source suiveuse (20) fournissant une entrée destinée à un amplificateur de sortie (36) connecté pour amplifier le signal lu ;
**caractérisé en ce que**
chaque pixel (10) comporte en outre un condensateur de gain (Ch) qui est connecté aux portes de lecture (18) et de réinitialisation (16) dans une chaîne de réaction aux bornes de l'amplificateur (36) de sorte que le pixel (10) soit adapté pour être réinitialisé à une tension à la terre virtuelle contrôlée.

2. Un capteur d'images selon la revendication 1, dans lequel l'amplificateur (36), pour chaque pixel (10), est formé par la source suiveuse (20) de ce pixel (10) en combinaison avec un circuit amplificateur (34) commun à tous les pixels dans une colonne donnée de la matrice.

3. Un capteur d'images selon la revendication 1 ou la revendication 2, dans lequel la porte de réinitialisation (16) est connectée aux bornes du condensateur de gain (Ch) et la porte de lecture (18) est connectée en série avec le condensateur de gain (Ch), grâce à quoi une fermeture simultanée des portes de réinitialisation (16) et de lecture (18) amène l'amplificateur (36) à faire fonction d'amplificateur de gain unitaire.

4. Un capteur d'images selon la revendication 1 ou la revendication 2, dans lequel chaque colonne de la matrice de pixels est pourvue d'une ligne verticale commandée par une porte de réinitialisation additionnelle (40) et une porte d'amplification (42) ; et dans lequel chaque pixel (10) a son condensateur de gain (Ch) connecté entre ladite ligne verticale et la porte de lecture de pixel (18), les portes (16, 18, 40, 42) étant contrôlées pour amener la tension de sortie de l'amplificateur (36) à subir un rétablissement du niveau zéro au potentiel à la terre à la fin de chaque cycle de réinitialisation et de lecture.

5. Un capteur d'images selon n'importe quelle revendication précédente, dans lequel l'élément photosensible (22) est une photodiode fixée (pinned).

6. Une méthode pour faire fonctionner un capteur d'images ayant une matrice de pixels sensibles à la lumière (10) dans lequel chaque pixel a quatre transistors et une diode fixée et dans lequel chaque pixel (10) comprend un élément photosensible (22) qui développe une charge en réponse à de la lumière incidente, une porte de transfert (14) opérationnelle pour transférer ladite charge à un noeud de détection (Vpix), une porte de réinitialisation (16) opérationnelle pour appliquer une tension de réinitialisation au noeud de détection (Vpix), une porte de lecture (18) opérationnelle pour amener la charge sur le noeud de détection (Vpix) à être lue, et une source suiveuse (20) fournissant une entrée destinée à un amplificateur de sortie (36) connecté pour amplifier le signal lu ;
la méthode comprenant transférer la charge de photodiode sur un condensateur de gain (Ch) qui est fourni dans chaque pixel et qui est connecté aux portes de lecture (18) et de réinitialisation (16) dans une chaîne de réaction aux bornes de l'amplificateur de sortie de pixel (36) pour lire la charge sur le noeud de détection ; et réinitialiser le pixel (10) à une tension à la terre virtuelle.
